# EUROPEAN PATENT SPECIFICATION

(11) **EP 4 092 798 B1**
(45) Date of publication and mention of the grant of the patent: **27.05.2026**
(21) Application number: 21868065.0
(22) Date of filing: 22.03.2021
(51) Int. Cl.: H01M 10/0565, H01M 10/0525, C09D 4/00, C08F 120/44, C08F 2/44, C08F 4/04, H01M 10/052, H01M 50/543

(54) **GEL ELECTROLYTE COMPRISING A GEL ELECTROLYTE PRECURSOR AND AN ELECTROLYTE LIQUID**
GELELEKTROLYT, UMFASSEND EINEN GELELEKTROLYTVORLÄUFER UND EINE ELEKTROLYTFLÜSSIGKEIT
ELECTROLYTE EN GEL COMPRENANT UN PRÉCURSEUR D'ÉLECTROLYTE EN GEL ET UN LIQUIDE ÉLECTROLYTIQUE

(30) Priority: 18.09.2020 CN 202010986328
(43) Date of publication of application: 23.11.2022
(73) Proprietor: SVOLT ENERGY TECHNOLOGY CO., LTD, Changzhou, Jiangsu 213200 (CN)
(72) Inventor: LV, Wenbin, hangzhou, Jiangsu 213200 (CN); DENG, Suxiang, hangzhou, Jiangsu 213200 (CN); CHEN, Shaojie, hangzhou, Jiangsu 213200 (CN); YANG, Hongxin, hangzhou, Jiangsu 213200 (CN)
(74) Representative: Michalski Hüttermann & Partner Patentanwälte mbB
(86) International application number: PCT/CN2021/082142
(87) International publication number: WO 2022/057226

(56) References cited:
- CN-A- 101 475 663
- CN-A- 101 475 663
- CN-A- 102 522 589
- CN-A- 105 703 004
- CN-A- 109 411 809
- CN-A- 111 253 523
- CN-A- 112 133 961
- US-A1- 2004 224 233
- US-A1- 2004 224 233
- US-A1- 2017 288 267
- US-A1- 2018 183 098
- PATEL MONALISA ET AL: "Utilizing an ionic liquid for synthesizing a soft matter polymer "gel" electrolyte for high rate capability lithium-ion batteries", JOURNAL OF MATERIALS CHEMISTRY, vol. 21, no. 43, 1 January 2011 (2011-01-01), GB, pages 17419, XP093122950, ISSN: 0959-9428, DOI: 10.1039/c1jm12269j

## Description

### TECHNICAL FIELD

The present invention belongs to the field of battery materials, and relates to a gel electrolyte comprising a gel electrolyte precursor and an electrolyte liquid and use thereof

### BACKGROUND

With the rapid development and progress of society, the problems of energy shortage and environmental pollution have been increasingly serious, and there is more and more urgent need for clean energy; meanwhile, new energy vehicles are increasingly popular, and the development of energy power is gradually expanding, which requires the development of lithium-ion batteries with higher energy density. At present, commercial lithium batteries has hit an energy density bottleneck, and it is difficult to improve in terms of high energy density. As the next-generation battery, solid-state batteries have been pushed to the forefront, but solid-state batteries have lots of difficulty in developing, have high requirements on the process, and cannot achieve mass production at present; as a result, it gave a rise to semi-solid batteries as an interim product.

There is a spate of spontaneous combustion of new energy vehicles, and people have been trying to develop novel batteries which are safer. All-solid-state batteries have attracted widespread attention because the batteries do not contain electrolyte components and can exist more stably inside the cells; however, currently, the all-solid-state battery technology is still immature, and there is still a long way to go before industrialization. As an intermediate product between liquid batteries and all-solid-state batteries, semi-solid batteries can reduce the amount of electrolyte liquid inside the cells and improve the cell safety to a certain extent, which are the closest and easiest interim product to mass production so far.

Solid-state batteries can be divided into two main classes according to the prepare method: ①semi-solid batteries; ② all-solid-state batteries, in which, for the all-solid-state batteries, the positive and negative separators are in solid-solid contact, and the Li⁺ conduction has large resistance, so that the all-solid-state batteries are hard to reach the level of traditional liquid-state batteries currently; the semi-solid batteries, as an interim between traditional liquid-state batteries and all-solid-state batteries, are better than the all-solid-state batteries in preparation operability, battery rate capability and cycle performance.

As an interim product from traditional liquid batteries to all-solid-state batteries, the semi-solid batteries need to have both excellent rate capability and cycle performance of traditional liquid batteries, and have the safety performance of all-solid-state batteries at the same time. In order to improve the battery in safety performance, the amount of electrolyte liquid should be minimized. Electrolyte liquid is the substance with the lowest flash point and the lowest boiling point in the battery system, and it is also the most combustible substance; it is an important means to reduce the amount of liquid electrolyte for improving the battery in safety performance, and the gel electrolyte has attracted much attention as a safe electrolyte.

Therefore, it has a great significance to develop a gel electrolyte precursor that can be applied to semi-solid batteries, gives the batteries electrical performances comparable to traditional liquid batteries, and has higher safety performance.

Document CN 101475663 discloses a method for preparing ion liquid type gel polymer electrolyte and battery by in situ polymerization.

Document XP93122950A discloses utilizing an ionic liquid for synthesizing a soft matter polymer "gel" electrolyte for high rate capability lithium-ion battery.

Document CN 111253523 discloses a non-combustible gel polymer electrolyte as well as preparation method and application thereof.

Document US 2018/0183098 discloses a polymer electrolyte, polymer electrolyte composition, battery, and electrode apparatus.

Document US 2017/0288267 discloses a method for forming liquid electrolyte-containing gel electrolyte membrane and electrolyte assembly, and gel electrolyte cell and method for forming the same, and gel polymer lithium-ion battery.

Document US 2004/0224233 discloses a method for preparation of chemically crosslinked polyacrylonitrile polymer electrolyte as separator for secondary battery.

### SUMMARY

The present invention, defined in the appended claims, provides a gel electrolyte comprising a gel electrolyte precursor and an electrolyte liquid and use thereof.

The gel electrolyte precursor includes a gel skeleton monomer, a flexible additive, a polymerization initiator and a lithium salt, in which the gel skeleton monomer includes an acrylonitrile monomer and in which the flexible additive is selected from butanedinitrile and/or an ionic liquid.

Electrolyte liquid is the substance with the lowest flash point and the lowest boiling point in the battery system, the flash point of which can be as low as 80°C, and it is also the most combustible substance; during the use of battery, the electrolyte liquid is the main cause of safety problems, so that most safety problems can be avoided by reducing the amount of electrolyte liquid.

In an embodiment provided by the present disclosure, the gel skeleton monomer serves as the skeleton of the gel electrolyte, the flexible additive acts to soften the gel electrolyte, and subsequently, the gel electrolyte precursor is mixed with the electrolyte liquid, and then subjected to in-situ polymerization gelation and baking, so as to obtain a gel electrolyte with an elastic porous structure; the gel electrolyte can absorb electrolyte liquid inside the battery, thereby reducing the free electrolyte liquid in the battery, and improving the safety performance of the battery due to the reduction in the electrolyte amount. Meanwhile, the absorbed electrolyte liquid and the elastic porous gel electrolyte form a new gel electrolyte, which has high electrical conductivity, ensures the rate capability of the battery, and enables the obtained battery to have high electrical performances.

In an embodiment provided by the present disclosure, the gel skeleton monomer includes an acrylonitrile monomer; because the acrylonitrile monomer has a high reactivity ratio, it can form linear polymers in a short time, and the linear polymers are intertwined with each other and form a network structure; thus, there is no need to use cross-linking agents.

In an embodiment provided by the present disclosure, the acrylonitrile monomer contains double bonds, and during the process of in-situ-polymerization gelation, the acrylonitrile monomer opens up double bonds to form chains under the effect of polymer initiator, and removes the volatile component through baking during the subsequent baking process, and the volatile component forms pores in the gel electrolyte, while the polymer skeleton structure is retained, forming the skeleton structure with elasticity and pores. Moreover, the acrylonitrile polymer, which is obtained by using the acrylonitrile monomer as a skeleton material and subjecting the acrylonitrile monomer to in-situ-polymerization gelation, has excellent flame retardancy and high-voltage resistance, thereby further improving the battery in safety performance.

In an embodiment, the acrylonitrile monomer includes at least one of acrylonitrile or 2-bromoacrylonitrile.

In an embodiment, the acrylonitrile monomer is acrylonitrile.

The gel skeleton monomer includes the acrylonitrile monomer, which is mixed with the electrolyte liquid and forms the acrylonitrile polymer (such as polyacrylonitrile) through the in-situ-polymerization gelation process, and polyacrylonitrile has excellent flame retardancy and high-voltage resistance, which can significantly improve the battery in safety performance during the use of battery.

In an embodiment provided by the present disclosure, the gel electrolyte solution, obtained after mixing the electrolyte liquid with the gel electrolyte precursor, can be uniformly dip-coated on a positive electrode sheet and/or a negative electrode sheet.

In an embodiment provided by the present disclosure, the semi-solid battery, which is obtained by using the gel electrolyte of the present disclosure, has basically same initial efficiency and rate capability as the liquid battery, and the electrical performances of the battery are not affected; the gel electrolyte obtained from the gel precursor of the present disclosure can fix the electrolyte liquid in the battery, so that the electrolyte liquid cannot move freely in the battery, reducing the free electrolyte outside the bare cell, and reducing the safety problems in the safety test, and the safety performance is significantly better than that of the liquid battery.

In an embodiment, the flexible additive is selected from butanedinitrile and/or an ionic liquid.

In an embodiment, the ionic liquid includes at least one of 1-methyl-1-propylpiperidinium bis(trifluoromethylsulfonyl)imide salt (PP13TFSI), 1-butyl-1-methylpiperidinium bis(trifluoro methylsulfonyl)imide salt (PP14TFSI), 1-butyl-1-methylpyrrolidinium bis(trifluoromethane sulfonyl)imide salt (Pyr14TFSI), 1-methyl-1-propylpyrrolidinium bis(fluorosulfonyl)imide (Pyr13FSI), 1-methyl-1-propylpyrrolidinium bis(trifluoromethylsulfonyl)imide salt (Pyr13TFSI), 1-ethyl-3-methylimidazolium bis(trifluoromethylsulfonyl)imide salt ([EMIM]TFSI) and 1-ethyl-3-methylimidazolium tetrafluoroborate salt ([EMIM]BF4).

In an embodiment provided by the present disclosure, the flexible additive uses butanedinitrile and/or an ionic liquid, which has the following characteristics: 1) because butanedinitrile and the ionic liquid have relatively high boiling point, their vapor pressure changes slightly with temperature, and they barely volatilize during the drying process, and basically remain in the system after other solvents with low boiling polints are completely volatilized; 2) butanedinitrile and the ionic liquid have large viscosity, which can play a role in softening the electrolyte; and 3) substances such as butanedinitrile and the ionic liquid are nonflammable, which can improve the safety of electrolyte materials; therefore, the use of butanedinitrile and ionic liquid can soften the electrolyte materials, and the increase of electrolyte flexibility will reduce the glass transition temperature of the electrolyte, thereby improving the conductivity.

In an embodiment, the polymerization initiator is selected from azobisisobutyronitrile (AIBN) and/or azobisisoheptanenitrile (V65).

In an embodiment, the polymerization initiator is azobisisobutyronitrile.

In an embodiment, the lithium salt is selected from at least one of lithium perchlorate (LiClO₄), lithium bis(trifluoromethanesulfonyl)imide (LiTFSI), lithium bis(fluorosulfonyl)imide (LiFSI), lithium bis(oxalato)borate (LiBOB) and lithium tetrafluoroborate (LiBF₄).

In an embodiment, the lithium salt is lithium bis(trifluoromethanesulfonyl)imide.

In an embodiment provided by the present disclosure, the gel electrolyte precursor includes the above-mentioned lithium salt, which can dissolve in the gel electrolyte precursor and dissociate lithium ions, and has high thermal stability, facilitating to forming stable gel electrolyte, and has high electrical conductivity, resulting in that the lithium-ion battery has high rate capability.

In a lithium ion battery, electrolyte conductance requires freely mobile lithium ions, the lithium salt of the present disclosure is used to provide mobile lithium ions, and it is a current common method to use lithium salts for providing a lithium ion source. The commonality of lithium ion sources is certainly to contain lithium ions, and the lithium ion source should also be capable of dissolving in the gel electrolyte precursor and dissociating lithium ions. In the application, different lithium salts can be selected according to the size of their anions, and there are differences in both dissociation degree and conductivity rate; besides, the lithium salt needs to be stable at high temperature in the present disclosure, and the above lithium salts are stable at high temperature; however, lithium hexafluorophosphate has the problem of instability and easy decomposition at high temperature, so that it is not recommended to use.

In an embodiment, based on that a total mass of the gel skeleton monomer, the flexible additive and the polymerization initiator is 100%, the gel electrolyte precursor includes the following components:
gel skeleton monomer 30-80%
flexible additive 20-60%
polymerization initiator 1-10%.

In an embodiment provided by the present disclosure, in the gel precursor, based on that a total mass of the gel skeleton monomer, the flexible additive and the polymerization initiator is 100%, in the gel electrolyte precursor, a mass percentage of the gel skeleton monomer is 30-80%, such as 35%, 40%, 45%, 50%, 55%, 60%, 65%, 70% or 75%, ect.; a mass percentage of the flexible additive is 20-60%, such as 25%, 30%, 35%, 40%, 45%, 50% or 55%, ect.; a mass percentage of the polymerization initiator is 1-10%, such as 2%, 3%, 5%, 7% or 9%, ect.

In an embodiment, a ratio of a molar amount of the lithium salt to a volume of the gel skeleton monomer is 0.1-2 mol/L, such as 0.3 mol/L, 0.5 mol/L, 0.8 mol/L, 1 mol /L, 1.2 mol/L, 1.5 mol/L or 1.8 mol/L, ect.

In an embodiment, a ratio of a molar amount of the lithium salt to a volume of the gel skeleton monomer is 0.5-1.5 mol/L.

In an embodiment provided by the present disclosure, by ensuring that each component of the gel electrolyte precursor satisfies the above-mentioned composition, the gel electrolyte precursor is conducive to subsequent in-situ-polymerization gelation, and baking to form an elastic porous structure; furthermore, it is beneficial to absorb the electrolyte liquid in the battery, forming a new gel electrolyte, keeping high conductivity rate, and guaranteeing the rate capability of the battery; additionally, the amount of electrolyte liquid is reduced, the free electrolyte liquid outside the bare cell is reduced, and the safety performance of the battery is improved.

In an embodiment, based on that a total mass of the gel skeleton monomer, the flexible additive and the polymerization initiator is 100%, the gel electrolyte precursor includes the following components:
gel skeleton monomer 50-65%
flexible additive 30-45%
polymerization initiator 2-5%.

In an embodiment provided in the present disclosure, based on that a total mass of the gel skeleton monomer, the flexible additive and the polymerization initiator is 100%, in the gel electrolyte precursor, a mass percentage of the gel skeleton monomer is 50-65%, such as 55%, 60% or 65%, ect; a mass percentage of the flexible additive is 30-45%, such as 33%, 35%, 38%, 40%, 42% or 44%, ect; a molar percentage of the polymerization initiator is 2-5%, such as 3% or 4%, ect.

The present invention provides a solution for preparing a gel electrolyte, and the solution includes the gel electrolyte precursor defined previously and an electrolyte liquid.

In an embodiment provided by the present disclosure, the gel electrolyte precursor is mixed with an electrolyte liquid, and subjected to gelation treatment to give a gel electrolyte; there is no limitation on a ratio of the electrolyte liquid, and for example, a solvent of the electrolyte liquid can be a mixture of ethylene carbonate (EC), dimethyl carbonate (DMC) and ethyl methyl carbonate (EMC) (for example, EC:DMC:EMC=2:4:4), in which a content of lithium hexafluorophosphate (LiPF₆) is 1.15 mol/L, and 7wt% fluoroethylene carbonate (FEC) is also contained.

In an embodiment, a mass ratio of the gel electrolyte precursor to the electrolyte liquid is 0.1:9.9-9.9:0.1 in the solution for preparing a gel electrolyte, such as 1:9, 2:8, 3:7, 5:5, 6:4, 7:3, 8:2 or 9:1, etc.

In an embodiment, a mass ratio of the gel electrolyte precursor to the electrolyte liquid is 4:6-6:4 in the solution for preparing a gel electrolyte.

In an embodiment, the solution for preparing a gel electrolyte is prepared by the following method, which includes mixing the gel electrolyte precursor and the electrolyte liquid, so as to obtain the solution for preparing a gel electrolyte.

In an embodiment, the present disclosure provides a preparation method of a gel electrolyte, and the method includes subjecting the solution for preparing a gel electrolyte according to an embodiment to in-situ-polymerization gelation, and then baking the same, so as to obtain a gel electrolyte.

In an embodiment provided by the present disclosure, the gel electrolyte precursor is mixed with the electrolyte liquid, and then subjected to in-situ polymerization gelation and baking, so as to obtain a gel electrolyte with an elastic porous structure; the gel electrolyte can absorb electrolyte liquid inside the battery, thereby reducing the free electrolyte liquid in the battery, and improving the battery in safety performance.

In an embodiment, a temperature of the in-situ-polymerization gelation is 70-75°C, such as 71°C, 72°C, 73°C or 74°C, etc.

In an embodiment, the baking is vacuum baking.

In an embodiment, a vacuum degree of the vacuum baking is less than or equal to 0.1 kPa, such as 0.01 kPa, 0.03 kPa, 0.05 kPa, or 0.08 kPa, etc.

In an embodiment, a temperature of the baking is 80-85°C, such as 81°C, 82°C, 83°C or 84°C,etc.

In an embodiment provided by the present disclosure, the gel electrolyte precursor is mixed with the electrolyte liquid and subjected to in-situ-polymerization gelation, and then baked to remove part of solvents in the electrolyte liquid through volatilization, forming an elastic porous gel electrolyte, and the semi-solid battery, assembled from the gel electrolyte, only needs a small amount of electrolyte.

In an embodiment, the present disclosure provides a gel electrolyte prepared by the method according to an embodiment, and the gel electrolyte has a porous structure.

In an embodiment, the gel electrolyte has an elastic porous structure. The elastic porous gel electrolyte can absorb the electrolyte liquid, thereby reducing the free electrolyte liquid in the battery; meanwhile, the absorbed electrolyte liquid and the elastic porous gel electrolyte form a new gel electrolyte, which has high electrical conductivity, ensures high conductivity rate of the electrolyte, ensures the rate capability and electrical performances of the battery, reduces the amount of the electrolyte liquid, and improves the battery in safety performance.

The gel electrolyte in the present disclosure can be applied to a positive electrode and/or a negative electrode of the battery; for example, both the positive electrode and the negative electrode use the gel electrolyte in the present disclosure, or any one of the positive electrode or the negative electrode uses the gel electrolyte in the present disclosure, and the other electrode sheet uses other electrolyte, and for example, the other electrode sheet uses other gel electrolyte, or does not use gel electrolyte or uses other type of electrolyte, etc.

In an embodiment, the present disclosure provides a preparation method of an electrode sheet including a gel electrolyte, and the method includes: coating an electrode sheet with the solution for preparing a gel electrolyte according to an embodiment, subjecting the same to in-situ polymerization, and drying the same, so as to obtain an electrode sheet including a gel electrolyte.

In an embodiment, the electrode sheet includes a positive electrode sheet and/or a negative electrode sheet.

The electrode sheet here is a prepared positive electrode sheet and/or a prepared negative electrode sheet.

In an embodiment provided by the present disclosure, the gel electrolyte precursor can be applied to the any positive and negative electrode materials of lithium ion battery; for example, the positive electrode active material can be lithium cobalt oxide (LCO), lithium nickel oxide (LNO), lithium manganite oxide (LMO), nickel cobalt manganese (NCM) or a high nickel system; the negative electrode active material can be artificial graphite, natural graphite, a silicon oxygen system, a silicon carbon system, a lithium system, etc.

In an embodiment, a method of the coating includes dip coating.

In an embodiment, the dip coating includes placing the electrode sheet into a solution for preparing a gel electrolyte.

In an embodiment provided by the present disclosure, during the dip coating process of the electrode sheet, the electrode sheet is immersed in a solution for preparing a gel electrolyte, and in this process, the electrode sheet fully absorbs a mixed solution of the gel electrolyte precursor and the electrolyte liquid based on capillary effect; after standing for sufficient time, the electrode sheet is taken out from the aluminum laminated film, the surface of the electrode sheet is wiped, and the dip coating of the electrode sheet is completed; the positive electrode sheet and the negative electrode sheet have the same dip coating method.

In an embodiment, the electrode sheet is vertically placed in a solution for preparing a gel electrolyte.

In an embodiment, the method further includes wiping the surface of the electrode sheet after the dip coating.

In an embodiment, the wiping is performed with dustless paper.

In an embodiment, a temperature of the in-situ polymerization is 70-75°C, such as 70°C, 71°C, 72°C, 73°C, 74°C or 75°C, etc.

In an embodiment provided by the present disclosure, by controlling the temperature of the in-situ polymerization within the above range, it is conducive to rapid gelation. With an excessively low polymerization temperature, the gelation process will be long, affecting the engineering time and engineering capability; with an excessively high polymerization temperature, the polymerization reaction will be too violent, the polymerization cannot be fully completed, and the gel may not be formed, and failure to form a good gel system will be against the battery safety.

The positive electrode sheet here can have different in-situ polymerization conditions of the gel electrolyte; for example, the negative electrode sheet has an in-situ polymerization condition of in-situ polymerization at 75°C for 24 h, and the positive electrode sheet has an in-situ polymerization condition of in-situ polymerization at 75°C for 17 h.

In an embodiment, the electrode sheet after dip coating is placed in an aluminum laminated film before the in-situ polymerization starts; the aluminum laminated film here is a clean aluminum laminated film.

In an embodiment, a time of the in-situ polymerization is 16-32 h, such as 17 h, 19 h, 21 h, 24 h, 28 h or 30 h, etc.

In an embodiment, the method further includes wiping an electrode tab of the electrode sheet after the in-situ polymerization.

In an embodiment, a solvent for wiping the electrode tab of the electrode sheet is dimethyl sulfoxide.

During the dip coating process, the precursor may stick to the tab, which will affect the subsequent welding performance; by using the above-mentioned solvent to wipe the tab after in-situ polymerization here, the quality of subsequent welding can be guaranteed. If there were a method protecting the tab from sticking, this step would be removed.

In an embodiment, the method further includes drying after the in-situ polymerization.

In an embodiment, the electrode sheet after in-situ polymerization is wrapped with dustless paper before the drying.

The drying processes of the positive electrode sheet and the negative electrode sheet are performed in different ovens to avoid cross-contamination; and after drying, if not used immediately, the electrode sheet needs to be packaged with an aluminum laminated film to avoid absorbing moisture in the air.

In an embodiment, the drying is vacuum drying.

In an embodiment, a temperature of the drying is 80-85°C, such as 82°C, 84°C or 85°C, ect.

The vacuum drying is performed at the above temperature here to remove part of the solvent in the electrolyte liquid, thereby forming an electrode sheet including an elastic porous gel electrolyte; when the temperature is excessively low, the components with low boiling point cannot be volatilized completely, the porous structure cannot be formed well, and after adding electrolyte liquid in the later stage, the electrolyte liquid cannot fully wet the gel electrolyte, and for the battery system, the conductivity rate is low and the rate capability will be affected; when the temperature is excessively high, the lithium salt structure will be destroyed in the electrolyte, the electrolyte elasticity will be destroyed, the electrolyte will become brittle and the conductivity rate will decrease.

In an embodiment, the method includes the following steps:
(1) placing an electrode sheet vertically into an aluminum laminated film packaging a solution for preparing a gel electrolyte for 20-30 h, then taking the electrode sheet out, and wiping the surface of the electrode sheet with dustless paper, so as to complete dip coating of the electrode sheet;
(2) placing the electrode sheet after dip coating in step (1) into an aluminum laminated film, placing the same at 70-75°C for in-situ polymerization for 24 h, then taking the electrode sheet out and wiping an electrode tab with dimethyl sulfoxide; and
(3) wrapping the electrode sheet after in-situ polymerization in step (2) with dustless paper, and placing the same into an oven for vacuum drying at 80-85°C, so as to obtain an electrode sheet including a gel electrolyte.

In an embodiment, the present disclosure provides an electrode sheet including a gel electrolyte prepared by the method according to an embodiment.

In an embodiment, the present disclosure provides a semi-solid battery, and at least one of a positive electrode sheet or a negative electrode sheet of the semi-solid battery uses the electrode sheet including a gel electrolyte according to an embodiment.

In an embodiment, the semi-solid battery includes at least one of a pouch battery, a cylindrical battery and a square aluminum-case battery.

In an embodiment, the semi-solid battery is a pouch battery.

In an embodiment, an assembly method of the semi-solid battery includes a lamination method and/or a winding method.

In an embodiment, a preparation of the semi-solid battery includes assembling the positive electrode sheet and the negative electrode sheet by winding or laminating, then subjecting the same to liquid injection, standing at 40-50°C and then formation, so as to obtain the semi-solid battery; there is no limitation on the processes of liquid injection and formation.

### BRIEF DESCRIPTION OF DRAWINGS

The accompanying drawings are used to provide a further understanding of the technical solutions of the present disclosure, constitute a part of the specification, explain the technical solutions of the present disclosure in conjunction with examples of the present application, and have no limitation on the technical solutions of the present disclosure.
FIG. 1 is a process flow showing dip coating process of a positive electrode sheet in an example of the present disclosure.
FIG. 2 is a process flow diagram showing in-situ-polymerization gelation of a positive electrode sheet after dip coating in an example of the present disclosure.
FIG. 3 is a SEM+EDX image showing the surface of a positive electrode sheet including a gel electrolyte in an example of the present disclosure.
FIG. 4 is a SEM image showing the surface of a positive electrode sheet including a gel electrolyte in an example of the present disclosure, in which the boxed area is denoted as area A, that is, the lower area.
FIG. 5 is a SEM image showing the surface of a positive electrode sheet including a gel electrolyte in an example of the present disclosure, in which the boxed area is denoted as area B, that is, the upper area.
FIG. 6 is an optical image showing an acupuncture safety test of a liquid NCM-Cr battery in Comparative Example 1 of the present disclosure.
FIG. 7 is an optical image showing an acupuncture safety test of a semi-solid battery (a PVCA gel NCM-Gr battery) in an example of the present disclosure.

### DETAILED DESCRIPTION

The technical solutions of the present disclosure will be further described below with reference to the drawings and through specific embodiments. It should be apparent to those skilled in the art that the embodiments are merely used for a better understanding of the present disclosure.

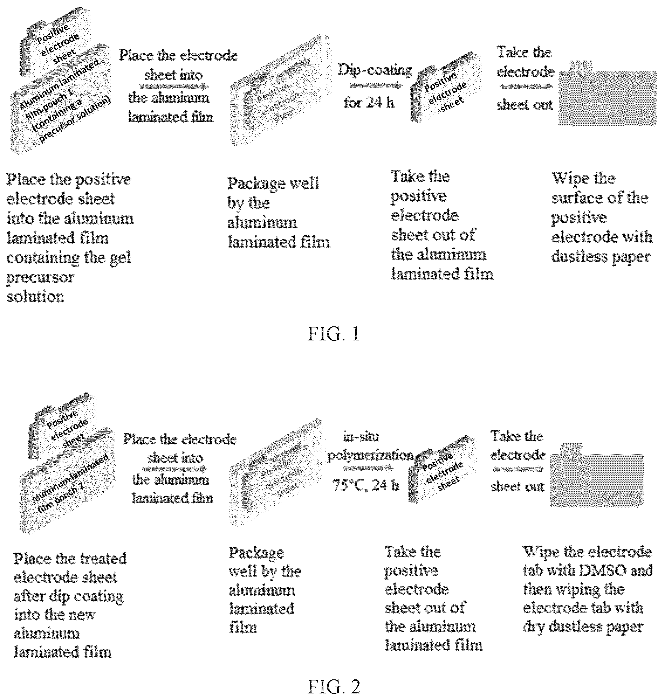

In an embodiment, the present disclosure provides a preparation method of a positive electrode sheet including a gel electrolyte, and the preparation flow diagram of the method is shown in FIG. 1 and FIG. 2, which includes the following steps:
(a) a gel electrolyte precursor and an electrolyte liquid are prepared;
(b) the gel electrolyte precursor and the electrolyte are mixed to obtain a mixed solution, and the mixed solution is packaged in an aluminum laminated film;
(c) a positive electrode sheet is placed vertically into the aluminum laminated film in step (b) for dip coating of the positive electrode sheet;
(d) the positive electrode sheet is subjected to surface treatment after of dip coating, and that is, the surface of the positive electrode sheet is wiped with dustless paper;
(e) the positive electrode sheet in step (d) is placed into a new aluminum laminated film for in-situ polymerization (for example, in-situ polymerization at 75°C for 24 h);
(f) an electrode tab of the positive electrode sheet after in-situ polymerization is wiped, and for example, the electrode tab is wiped with DMSO first, and then wiped with dry dustless paper; and
(g) the positive electrode sheet in step (f) is subjected to vacuum drying, so as to obtain a positive electrode sheet including a gel electrolyte; the gel electrolyte has an elastic porous structure.

The typical but non-limiting examples of the present disclosure are described below.

### Example 1

In this example, a gel electrolyte precursor included the following components: a gel skeleton monomer, a flexible additive, a polymerization initiator and a lithium salt;
wherein, the gel skeleton monomer was an acrylonitrile monomer;
the flexible additive was butanedinitrile;
the polymerization initiator was azobisisobutyronitrile; and
the lithium salt was lithium bis(trifluoromethanesulfonyl)imide.

Based on that a total mass of the gel skeleton monomer, the flexible additive and the polymerization initiator was 100%, the gel electrolyte precursor included the following components:
gel skeleton monomer 58%
flexible additive 38%
polymerization initiator 4%.

A ratio of a molar amount of the lithium salt to a volume of the gel skeleton monomer was 1 mol/L.

Components of an electrolyte liquid: a solvent with a volume ratio of EC:DMC:EMC=2:4:4, LiPF₆ with a content of 1.15 mol/L, and 7% FEC.

A mass ratio of the gel electrolyte precursor to the electrolyte liquid was 1:1 for mixing.

Positive electrode sheet: a current collector was an aluminum foil of 12 µm, a positive electrode active material was NCM622, a binder was PVDF 5130, and a conductive agent was SP.

Negative electrode sheet: a current collector was a copper foil of 8 µm, a negative electrode active material was a mixture of artificial graphite and hard carbon, a conductive agent was SP, and a binder was CMC&SBR.

Preparation method of a negative electrode sheet including a gel electrolyte:
(1) a prepared negative electrode sheet was placed vertically into an aluminum laminated film packaging a solution for preparing a gel electrolyte, hold vertically for 24 h, then taken the electrode sheet out, and wiped on the surface with dustless paper, so as to complete dip coating of the electrode sheet;
(2) the negative electrode sheet after dip coating in step (1) was placed into a new aluminum laminated film, placed at 75°C for in-situ polymerization for 24 h, and then taken the electrode sheet out, and an electrode tab was wiped with dimethyl sulfoxide; and
(3) the electrode sheet after in-situ polymerization in step (2) was wrapped with dustless paper, and placed into an oven for vacuum drying at 85°C for 24 h, so as to obtain an electrode sheet including a gel electrolyte.

A preparation method of the positive electrode sheet including a gel electrolyte differs from the method of the negative electrode sheet merely in that the in-situ polymerization condition was replaced with in-situ polymerization at 75°C for 17 h; different ovens were used to avoid cross-contamination, and other conditions were the same.

Assembling a semi-solid battery:
In this example, a semi-solid battery was prepared by lamination; after lamination, the semi-solid battery was obtained through liquid injection (1.5 g/Ah), standing at 45°C and formation, which was denoted as a polyacrylonitrile (PAN-SN) gel NCM-Gr battery.

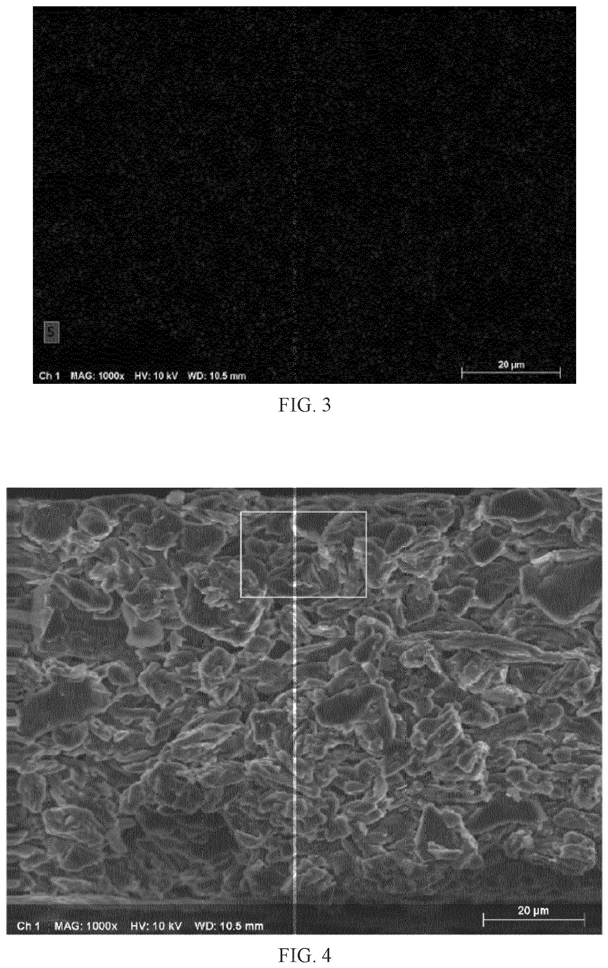

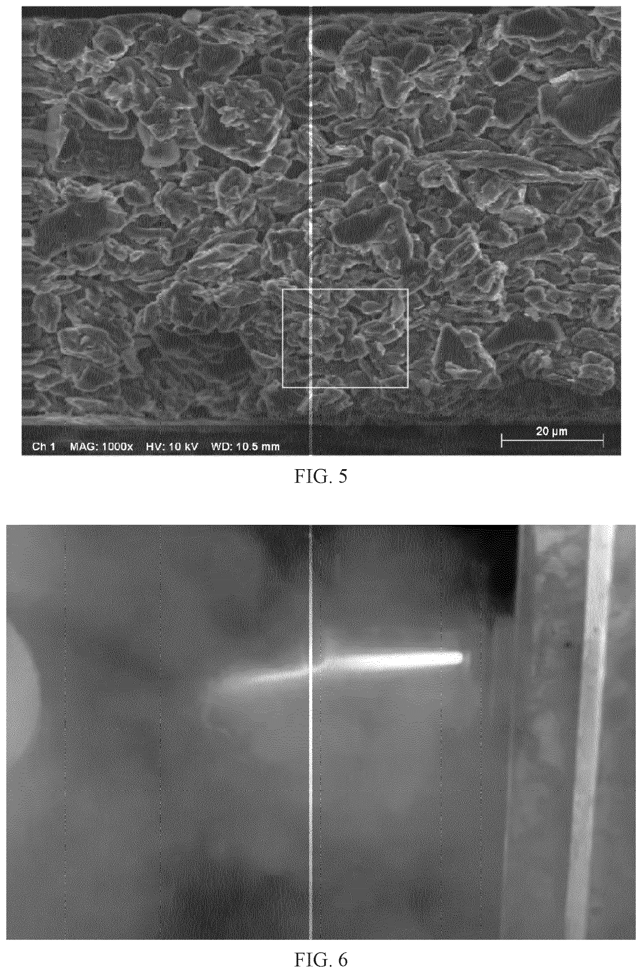

The negative electrode sheet including a gel electrolyte prepared in Example 1 was tested for the uniformity of the gel formation, and the test method was SEM+EDX; the S element in LiTFSI was used for determination, the electron microscope image was shown in FIG. 3, and it can be seen from the SEM+EDX image that the S element was uniformly distributed, and the gel was formed uniformly from top to bottom in the electrode sheet; the element percentage was used for determination, and as shown in FIG. 4 (the lower area) and FIG. 5 (the upper area), on the same electrode sheet, S element contents of the upper and lower areas are respectively the upper part: 4.1%, the lower part: 4.01%; in the range of 4±0.2%; the gel was formed very uniformly.

The element distribution table of the lower area in FIG. 4 is shown in Table 1:

**Table 1**

| Element | Atomic Number | Net Value | Mass (%) | Normalized Mass (%) | Atom |
|---|---|---|---|---|---|
| C | 6 | 412171 | 88.31 | 87.31 | 90.54 |
| N | 7 | 1384 | 2.09 | 2.05 | 1.82 |
| O | 8 | 8466 | 3.42 | 4.46 | 3.47 |
| F | 9 | 6677 | 2.08 | 2.04 | 1.34 |
| S | 16 | 13464 | 4.1 | 4.15 | 2.83 |
| | | total: | 100.00 | 100.00 | 100.00 |

The element distribution table of the upper area in FIG. 5 is shown in Table 2:

**Table 2**

| Element | Atomic Number | Net Value | Mass (%) | Normalized Mass (%) | Atom |
|---|---|---|---|---|---|
| C | 6 | 193057 | 87.54 | 84.54 | 89.57 |
| N | 7 | 579 | 2.16 | 1.5 | 1.36 |
| O | 8 | 4545 | 4.16 | 4.15 | 3.30 |
| F | 9 | 3019 | 2.13 | 1.6 | 1.07 |
| S | 16 | 8358 | 4.01 | 3.98 | 2.79 |
| | | total: | 100.00 | 100.00 | 100.00 |

### Example 2

This example differs from Example 1 in that, based on that a total mass of the gel skeleton monomer, the flexible additive and the polymerization initiator was 100%, the gel electrolyte precursor included the following components:
gel skeleton monomer 75%
flexible additive 20%
polymerization initiator 5%;
a ratio of a molar amount of the lithium salt to a volume of the gel skeleton monomer was 2 mol/L; and
other parameters and conditions were identical with those in Example 1.

### Example 3

This example differs from Example 1 in that, based on that a total mass of the gel skeleton monomer, the flexible additive and the polymerization initiator was 100%, the gel electrolyte precursor included the following components:
gel skeleton monomer 30%
flexible additive 60%
polymerization initiator 10%;
a ratio of a molar amount of the lithium salt to a volume of the gel skeleton monomer was 0.1 mol/L; and
other parameters and conditions were identical with those in Example 1.

### Example 4

This example differs from Example 1 in that, based on that a total mass of the gel skeleton monomer, the flexible additive and the polymerization initiator was 100%, the gel electrolyte precursor included the following components:
gel skeleton monomer 65%
flexible additive 30%
polymerization initiator 5%;
a ratio of a molar amount of the lithium salt to a volume of the gel skeleton monomer was 1.5 mol/L; and
other parameters and conditions were identical with those in Example 1.

### Example 5

This example differs from Example 1 in that the mass ratio of the gel electrolyte precursor to the electrolyte liquid was replaced with 9:1 from 1:1, and other parameters and conditions were identical with those in Example 1.

### Example 6

This example differs from Example 1 in that the mass ratio of the gel electrolyte precursor to the electrolyte liquid was replaced with 1:9 from 1:1, and other parameters and conditions were identical with those in Example 1.

### Example 7

This example differs from Example 1 in that the flexible additive was replaced with an ionic liquid with equal mass, the ionic liquid had a component of a 1-butyl-1-methylpiperidinium bis(trifluoromethylsulfonyl)imide salt (PP14TFSI), and other parameters and conditions were identical with those in Example 1.

### Example 8

This example differs from Example 1 in that the lithium salt in the precursor was replaced with lithium perchlorate with equimolar amount, and other parameters and conditions were identical with those in Example 1.

### Example 9

This example differs from Example 1 in that the lithium salt in the precursor was replaced with lithium tetrafluoroborate with equimolar amount, and other parameters and conditions were identical with those in Example 1.

### Example 10

This example differs from Example 1 merely in the coating method used in the preparation process of the negative and positive electrode sheets including a gel electrolyte, which meant dip coating was not used; the mixed solution of the gel electrolyte precursor and the electrolyte liquid was coated on the surface of the electrode sheet, then subjected to in-situ polymerization, and baked, so as to obtain a negative electrode sheet including a gel electrolyte and a positive electrode sheet including a gel electrolyte, and other parameters and conditions were identical with those in Example 1.

In this example, the gel electrolyte precursor was coated on the surface of the positive electrode sheet by a coating method; after in-situ polymerization, the elemental analysis result of SEM+EDX showed that the surface of the electrode sheet had a high content of gel electrolyte, while the bottom of the electrode sheet (the side near the current collector) had a electrolyte content of 0% approximately; after coating, the upper and bottom of the electrode sheet had an non-uniform content, failing to achieve complete immersion.

### Comparative Example 1

This example differs from Example 1 merely in that the positive and negative electrode sheets had no gel electrolyte, and the prepared positive and negative electrode sheets were directly subjected to lamination, then liquid injection (2.65 g/Ah), standing and formation, so as to obtain a liquid battery, which was denoted as a liquid NCM-Gr (with a positive electrode of ternary material and a negative electrode of graphite and hard carbon) battery.

The test results of battery rate capability in Example 1 and Comparative Example 1 are shown in Table 3:

**Table 3**

| | | 1C/0.33C | 1C/0.5C | 1C/1C | 1C/2C |
|---|---|---|---|---|---|
| PAN-SN gel state NCM-Gr battery | Gram Capacity | 175.05 | 175.22 | 172.47 | 166.09 |
| | Percentage | 100% | 100% | 99% | 96% |
| NCM-Gr battery | Gram Capacity | 174.45 | 174.68 | 172.15 | 167.37 |
| | Percentage | 100% | 100% | 99% | 95% |

It can be seen from Table 3 that the rate capability of the PAN-SN gel state NCM-Gr battery of the present disclosure is similar to that of the liquid battery.

The test results of the battery charge/discharge capacity and initial efficiency in Example 1 and Comparative Example 1 are shown in Table 4;

**Table 4**

| | Charge Capacity (Ah) | Discharge Capacity (Ah) | Initial Efficiency (%) |
|---|---|---|---|
| Liquid NCM-Gr battery | 0.430 | 0.375 | 87.2% |
| PVCA gel state NCM-Gr battery | 0.430 | 0.373 | 86.7% |

It can be seen from Table 4 that, under the same system, the utilization of PAN-SN electrolyte battery has little difference with the traditional NCM-Gr battery in terms of charge capacity, discharge capacity or initial efficiency, indicating that the gel material of the present disclosure has no side effects on the battery.

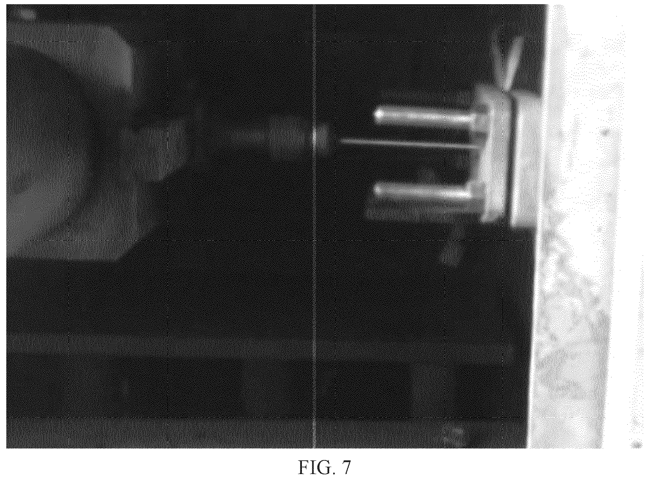

The optical images of the battery acupuncture safety test in Comparative Example 1 and Example 1 are shown in FIG. 6 and FIG. 7, respectively; the semi-solid battery in Example 1 passed the acupuncture test, while the acupuncture caused a fire in Comparative Example 1; it is indicated that the semi-solid battery prepared by using the gel electrolyte precursor of the present disclosure has higher safety.

### Comparative Example 2

This comparative example differs from Example 1 in that the gel electrolyte precursor had no flexible additive, and other parameters and conditions were identical with those in Example 1.

### Comparative Example 3

This comparative example differs from Example 1 in that the gel electrolyte precursor had no lithium salt, and other parameters and conditions were identical with those in Example 1.

### Comparative Example 4

This comparative example differs from Example 1 in that the lithium salt in Example 1 was replaced with LiPF₆, and other parameters and conditions were identical with those in Example 1.

This comparative example used LiPF₆ as a lithium salt of the gel electrolyte precursor; after gelation at 75°C, the gel could not be fully formed, a part of material was still liquid, and the color changed to dark-brown.

### Performance testing:

The batteries prepared in examples and comparative examples were tested for rate capability, initial efficiency, cycle performance and safety performance (acupuncture test), and the test results are shown in Table 5.

In the test, rate capability test conditions:
a) constant-current and constant-voltage charging: 0.33C CC 4 h to 4.25 V, CV to 0.05C;
b) standing for 5 min;
c) constant-current discharging: 0.33C DC to 2.5 V;
d) standing for 5 min;
e) constant-current and constant-voltage charging: 0.33C CC 4 h to 4.25 V, CV to 0.05C;
f) standing for 5 min; and
g) constant-current discharging: 1 C DC to 2.5 V.

The rate capability of 1C/0.33C was obtained by the test, and the test parameters of rate capability under other circumstances, such as 1C/0.5C, 1C/1C and 1C/2C, referred to the above conditions.

The initial efficiency test conditions: at an ambient temperature of 25°C;
a) constant-current and constant-voltage charging: 0.05C CC 22 h to 4.25 V, CV to 0.01C;
b) standing for 10 min; and
c) constant-current discharging: 0.05C DC to 2.5 V.

Cycle performance test conditions: at a test temperature of 25°C;
a) constant-current and constant-voltage charging: 1C CC to 4.25 V, CV to 0.05C;
b) standing for 5 min; c) constant-current discharging: 1C DC to 2.5 V; and
d) step a)-step c) were performed circularly for 100 times.

Safety (acupuncture test) conditions:
with reference to GBT31485-2015 Safety requirements and test methods for traction battery of electric vehicle, the steps are as follows:
a) a single cell was charged;
b) with a φ6.5 mm high-temperature resistance steel needle (a cone angle of the needle tip was 50°, and the needle surface was smooth and had no rust, oxide layer or oil stains), the cell was penetrated at a speed of 25 mm/s from a direction perpendicular to the storage battery plate, the penetration position was close to the geometric center of the pierced surface, and the steel needle stayed in the cell; and
c) observation for 1 h.

The test results are shown in Table 5;

**Table 5**

| | 1C/0.33C | Initial Efficiency % | Retention Rate after 100 Cycles % | Acupuncture Test |
|---|---|---|---|---|
| Example 1 | 92.1% | 86.7% | 97.3% | Passed |
| Example 2 | 86.6% | 75.5% | 75.7% | Passed |
| Example 3 | 83.3% | 77.6% | 85.0% | Passed |
| Example 4 | 92.7% | 86.9% | 97.7% | Passed |
| Example 5 | 39.5% | 55.2% | 65.8% | Passed |
| Example 6 | 93.7% | 87.1% | 97.7% | Failed |
| Example 7 | 92.5% | 86.6% | 97.2% | Passed |
| Example 8 | 76.5% | 71.2% | 79.6% | Passed |
| Example 9 | 86.8% | 69.2% | 79.8% | Passed |
| Example 10 | 73.5% | 72.2% | 80.6% | Failed |
| Comparative Example 1 | 93.1% | 87.2% | 97.8% | Failed |
| Comparative Example 2 | Failed to form gel | | | Failed |
| Comparative Example 3 | 74.6% | 60.6% | 78.5% | Failed |
| Comparative Example 4 | Failed to fully form gel, and changed to black in color | | | Failed |

As can be seen from Table 5, the battery is significantly improved in safety, which is assembled from the gel electrolyte obtained by mixing the gel electrolyte precursor of the present disclosure and the electrolyte liquid and subjecting to in-situ polymerization gelation, and the prepared semi-solid battery can realize electrical performances similar to that of the liquid battery, which achieves the effect of improving the battery safety while maintaining high electrical performances.

As can be seen from the comparison of Examples 1-4, the content of each component in the gel electrolyte precursor of the present disclosure will affect the performance of the semi-solid battery; when the content of each component meets the following conditions, the prepared semi-solid battery will have more significant improvements in the electrical performances and safety performance: based on that a total mass of the gel skeleton monomer, the flexible additive and the polymerization initiator is 100%, the gel electrolyte precursor includes the following components: the gel skeleton monomer with a mass percentage of 50-65%, the flexible additive with a mass percentage of 30-45%, and the polymerization initiator with a mass percentage of 2-5%.

As can be seen from the comparison of Examples 1 and 5-6, when a mass ratio of the gel electrolyte precursor to the electrolyte liquid is 0.1:9.9-9.9:0.1, high electrochemical performances and safety performance can be obtained; when the mass ration is 4:6-6:4, the improvement effect is better; when the mass ration is 1:1, the improvement effect is the best.

As can be seen from the comparison of Example 1 and Example 7, the semi-solid battery, which is obtained by mixing the electrolyte liquid and the gel electrolyte precursor prepared by adding the ionic liquid as a flexible additive, has performances similar to the liquid battery; however, the ionic liquid has the problem of high cost.

As can be seen from the comparison of Examples 1, 8 and 9, when lithium bis(trifluoromethanesulfonyl)imide is selected as the lithium salt in the gel electrolyte precursor of the present disclosure, the semi-solid battery will have better performances than those using lithium perchlorate or lithium borate.

As can be seen from the comparison of Example 1 and Example 10, the method of the present disclosure uses dip coating, which is more conducive to improving the battery in electrochemical performance and safety performance.

As can be seen from the comparison of Example 1 and Comparative Example 1, the battery, which is assembled from the gel electrolyte prepared by the gel electrolyte precursor of the present disclosure, can realize electrical performances similar to the liquid battery, and even has higher safety performance.

In Comparative Example 2, gel cannot be formed without flexible additive, and in the absence of flexible additive, the polymerization of skeleton monomers will increase the crystallinity of material, resulting in material pulverizing and precipitating; in Comparative Example 3, gel can be formed without lithium salt, but the conductivity of the gel system will decrease, the performance will be worse compared with those added lithium salt, and the safety performance will also deteriorate.

As can be seen from the comparison of Example 1 and Comparative Example 4, when lithium hexafluorophosphate is used as a lithium salt in the precursor, gel cannot be fully formed, the color changes to black, and the safety is poor.

## Claims

1. A solution for preparing a gel electrolyte, comprising a gel electrolyte precursor and an electrolyte liquid;
wherein the gel electrolyte precursor comprises a gel skeleton monomer, a flexible additive, a polymerization initiator and a lithium salt, and the gel skeleton monomer comprises an acrylonitrile monomer;
wherein the flexible additive is selected from butanedinitrile and/or an ionic liquid.

2. The solution for preparing a gel electrolyte according to claim 1, wherein, in the solution for preparing a gel electrolyte, a mass ratio of the gel electrolyte precursor to the electrolyte liquid is 0.1:9.9-9.9:0.1;
optionally, in the solution for preparing a gel electrolyte, the mass ratio of the gel electrolyte precursor to the electrolyte liquid is 4:6-6:4;
optionally, the solution for preparing a gel electrolyte is prepared by a method, which comprises mixing the gel electrolyte precursor and an electrolyte liquid, so as to obtain the solution for preparing a gel electrolyte.

3. A preparation method of a gel electrolyte, comprising subjecting the solution for preparing a gel electrolyte according to claim 1 to in-situ-polymerization gelation, and then baking the same, so as to obtain a gel electrolyte;
optionally, a temperature of the in-situ-polymerization gelation is 70-75°C;
optionally, the baking is vacuum baking; and a vacuum degree of the vacuum baking is less than or equal to 0.1 kPa; and wherein a temperature of the baking is 80-85°C.

4. A gel electrolyte prepared by the method according to claim 3, wherein the gel electrolyte has a porous structure;
optionally, the gel electrolyte has an elastic porous structure.

5. A preparation method of an electrode sheet including a gel electrolyte, comprising:
coating an electrode sheet with the solution for preparing a gel electrolyte according to claim 1, subjecting the same to in-situ polymerization, and drying the same, so as to obtain an electrode sheet including a gel electrolyte;
optionally, the electrode sheet comprises a positive electrode sheet and/or a negative electrode sheet.

6. The preparation method of an electrode sheet including a gel electrolyte according to claim 5, wherein a method of the coating comprises dip coating;
optionally, the dip coating comprises placing the electrode sheet into a solution for preparing a gel electrolyte; and the electrode sheet is vertically placed in a solution for preparing a gel electrolyte;
optionally, the method further comprises wiping the surface of the electrode sheet after the dip coating, and wherein the wiping is performed with dustless paper.

7. The preparation method of an electrode sheet including a gel electrolyte according to claim 5, wherein a temperature of the in-situ polymerization is 70-75°C, and a time of the in-situ polymerization is 16-32 h;
optionally, the method further comprises wiping an electrode tab of the electrode sheet after the in-situ polymerization, and wherein a solvent is dimethyl sulfoxide for wiping the electrode tab of the electrode sheet;
optionally, the drying is vacuum drying, and a temperature of the drying is 80-85°C.

8. The preparation method of an electrode sheet including a gel electrolyte according to claim 5, wherein the method comprises the following steps:
(1) placing an electrode sheet vertically into an aluminum laminated film packaging a solution for preparing a gel electrolyte for 20-30 h, then taking the electrode sheet out, and wiping the surface of the electrode sheet with dustless paper, so as to complete dip coating of the electrode sheet;
(2) placing the electrode sheet after dip coating in step (1) into an aluminum laminated film, placing the same at 70-75°C for in-situ polymerization for 24 h, then taking the electrode sheet out and wiping an electrode tab with dimethyl sulfoxide;
(3) wrapping the electrode sheet after in-situ polymerization in step (2) with dustless paper, and placing the same into an oven for vacuum drying at 80-85°C, so as to obtain an electrode sheet including a gel electrolyte.

9. An electrode sheet including a gel electrolyte prepared by the method according to claim 5;
optionally, the gel electrolyte on the electrode sheet including a gel electrolyte has a porous structure;
optionally, the gel electrolyte on the electrode sheet including a gel electrolyte has an elastic porous structure.

10. A semi-solid battery, wherein at least one of a positive electrode sheet or a negative electrode sheet of the semi-solid battery uses the electrode sheet including a gel electrolyte according to claim 9;
optionally, the semi-solid battery comprises at least one of a pouch battery, a cylindrical battery and a square aluminum-case battery;
optionally, the semi-solid battery is a pouch battery.

## Patentansprüche

1. Lösung zum Herstellen eines Gelelektrolyten, umfassend einen Gelelektrolytvorläufer und eine Elektrolytflüssigkeit;
wobei der Gelelektrolytvorläufer ein Gelgerüstmonomer, ein flexibles Additiv, einen Polymerisationsinitiator und ein Lithiumsalz umfasst und das Gelgerüstmonomer ein Acrylnitrilmonomer umfasst;
wobei das flexible Additiv aus Butandinitril und/oder einer ionischen Flüssigkeit ausgewählt ist.

2. Lösung zum Herstellen eines Gelelektrolyten gemäß Anspruch 1, wobei in der Lösung zum Herstellen eines Gelelektrolyten ein Massenverhältnis des Gelelektrolytvorläufers zu der Elektrolytflüssigkeit 0,1:9,9-9,9:0,1 beträgt;
optional beträgt in der Lösung zum Herstellen eines Gelelektrolyten das Masseverhältnis des Gelelektrolytvorläufers zu der Elektrolytflüssigkeit 4:6-6:4;
optional wird die Lösung zum Herstellen eines Gelelektrolyten durch ein Verfahren hergestellt, welches Mischen des Gelelektrolytvorläufers und einer Elektrolytflüssigkeit umfasst, um so die Lösung zum Herstellen eines Gelelektrolyten zu erhalten.

3. Herstellungsverfahren eines Gelelektrolyten, umfassend das Unterziehen der Lösung zum Herstellen eines Gelelektrolyten gemäß Anspruch 1 einer in-situ-Polymerisationsgelierung und dann das Ausheizen desselben, um einen Gelelektrolyten zu erhalten;
optional ist eine Temperatur der in-situ-Polymerisationsgelierung 70-75 °C;
optional ist das Ausheizen ein Vakuumausheizen; und ein Vakuumgrad des Vakuumausheizens ist kleiner oder gleich 0,1 kPa; und wobei eine Temperatur des Ausheizens 80-85 °C ist.

4. Gelelektrolyt, hergestellt durch das Verfahren gemäß Anspruch 3, wobei der Gelelektrolyt eine poröse Struktur aufweist;
optional weist der Gelelektrolyt eine elastische poröse Struktur auf.

5. Herstellungsverfahren für eine Elektrodenfolie, die einen Gelelektrolyten einschließt, umfassend:
Beschichten einer Elektrodenfolie mit der Lösung zum Herstellen eines Gelelektrolyten gemäß Anspruch 1, Unterziehen derselben einer in-situ-Polymerisation und Trocknen derselben, um so eine Elektrodenfolie zu erhalten, die einen Gelelektrolyten einschließt;
optional umfasst die Elektrodenfolie eine positive Elektrodenfolie und/oder eine negative Elektrodenfolie.

6. Herstellungsverfahren gemäß Anspruch 5 für eine Elektrodenfolie, die einen Gelelektrolyten einschließt, wobei ein Verfahren des Beschichtens Tauchbeschichten umfasst;
optional umfasst das Tauchbeschichten Platzieren der Elektrodenfolie in einer Lösung zum Herstellen eines Gelelektrolyten; und die Elektrodenfolie ist vertikal in einer Lösung zum Herstellen eines Gelelektrolyten platziert;
optional umfasst das Verfahren ferner Abwischen der Oberfläche der Elektrodenfolie nach dem Tauchbeschichten, und wobei das Abwischen mit staubfreiem Papier durchgeführt wird.

7. Herstellungsverfahren gemäß Anspruch 5 für eine Elektrodenfolie, die einen Gelelektrolyten einschließt, wobei eine Temperatur der in-situ-Polymerisation 70-75 °C ist und eine Zeit der in-situ-Polymerisation 16-32 h ist;
optional umfasst das Verfahren ferner Abwischen einer Kontaktfahne der Elektrodenfolie nach der in-situ-Polymerisation, und wobei ein Lösungsmittel Dimethylsulfoxid zum Abwischen der Kontaktfahne der Elektrodenfolie ist;
optional ist die Trocknung eine Vakuumtrocknung und eine Temperatur der Trocknung ist 80-85 °C.

8. Herstellungsverfahren gemäß Anspruch 5 für eine Elektrodenfolie, die einen Gelelektrolyten einschließt, wobei das Verfahren die folgenden Schritte umfasst:
(1) Platzieren einer Elektrodenfolie vertikal in einer Aluminiumlaminatfolie, die eine Lösung zum Herstellen eines Gelelektrolyten enthält, für 20-30 h, dann Herausnehmen der Elektrodenfolie und Abwischen der Oberfläche der Elektrodenfolie mit staubfreiem Papier, um das Tauchbeschichten der Elektrodenfolie abzuschließen;
(2) Platzieren der Elektrodenfolie nach dem Tauchbeschichten in Schritt (1) in einer Aluminiumlaminatfolie, Platzieren derselben für 24 h bei 70-75 °C für die in-situ-Polymerisation, danach Herausnehmen der Elektrodenfolie und Abwischen einer Kontaktfahne mit Dimethylsulfoxid;
(3) Umwickeln der Elektrodenfolie nach der in-situ-Polymerisation in Schritt (2) mit staubfreiem/fusselfreiem Papier und Platzieren derselben in einen Ofen zum Vakuumtrocknen bei 80-85 °C, um so eine Elektrodenfolie zu erhalten, die einen Gelelektrolyten einschließt.

9. Elektrodenfolie, die einen Gelelektrolyten einschließt, der durch das Verfahren gemäß Anspruch 5 hergestellt wird;
optional weist der Gelelektrolyt auf der Elektrodenfolie, die einen Gelelektrolyten einschließt, eine poröse Struktur auf;
optional weist der Gelelektrolyt auf der Elektrodenfolie, die einen Gelelektrolyten einschließt, eine elastische poröse Struktur auf.

10. Halbfeste Batterie, wobei zumindest eine von einer positiven Elektrodenfolie oder einer negativen Elektrodenfolie der halbfesten Batterie die Elektrodenfolie gemäß Anspruch 9 verwendet, die einen Gelelektrolyten einschließt;
optional umfasst die halbfeste Batterie zumindest eine von einer Pouch-Batterie, einer zylindrischen Batterie und einer prismatischen Aluminiumgehäusebatterie;
optional ist die halbfeste Batterie eine Pouch-Batterie.

## Revendications

1. Solution pour la préparation d'un électrolyte en gel, comprenant un précurseur d'électrolyte en gel et un liquide électrolytique ;
dans laquelle le précurseur d'électrolyte en gel comprend un monomère de squelette de gel, un additif flexible, un initiateur de polymérisation et un sel de lithium, et le monomère de squelette de gel comprend un monomère d'acrylonitrile ;
dans laquelle l'additif flexible est sélectionné parmi le butanedinitrile et/ou un liquide ionique.

2. Solution pour la préparation d'un électrolyte en gel selon la revendication 1, dans laquelle, dans la solution pour la préparation d'un électrolyte en gel, un rapport massique du précurseur d'électrolyte en gel au liquide électrolytique est de 0,1:9,9-9,9:0,1 ;
éventuellement, dans la solution pour la préparation d'un électrolyte en gel, le rapport massique du précurseur d'électrolyte en gel au liquide électrolytique est de 4:6-6:4 ;
éventuellement, la solution pour la préparation d'un électrolyte en gel est préparée par un procédé, qui comprend le mélange du précurseur d'électrolyte en gel et d'un liquide électrolytique, de manière à obtenir la solution pour la préparation d'un électrolyte en gel.

3. Procédé de préparation d'un électrolyte en gel, comprenant la soumission de la solution pour la préparation d'un électrolyte en gel selon la revendication 1 à une gélification par polymérisation in situ, puis la cuisson de celle-ci, de manière à obtenir un électrolyte en gel ;
éventuellement, une température de la gélification par polymérisation in situ est de 70-75 °C ;
éventuellement, la cuisson est une cuisson sous vide ; et un degré de vide de la cuisson sous vide est inférieur ou égal à 0,1 kPa ; et dans lequel une température de cuisson est de 80-85 °C.

4. Électrolyte en gel préparé par le procédé selon la revendication 3, dans lequel l'électrolyte en gel présente une structure poreuse ;
éventuellement, l'électrolyte en gel présente une structure poreuse élastique.

5. Procédé de préparation d'une feuille d'électrode comprenant un électrolyte en gel, comprenant :
le revêtement d'une feuille d'électrode avec la solution pour la préparation d'un électrolyte en gel selon la revendication 1, la soumission de celle-ci à une polymérisation in situ, et le séchage de celle-ci, de manière à obtenir une feuille d'électrode comprenant un électrolyte en gel ;
éventuellement, la feuille d'électrode comprend une feuille d'électrode positive et/ou une feuille d'électrode négative.

6. Procédé de préparation d'une feuille d'électrode comprenant un électrolyte en gel selon la revendication 5, dans lequel un procédé de revêtement comprend un revêtement par immersion ; éventuellement, le revêtement par immersion comprend le placement de la feuille d'électrode dans une solution pour la préparation d'un électrolyte en gel ; et la feuille d'électrode est placée verticalement dans une solution pour la préparation d'un électrolyte en gel ;
éventuellement, le procédé comprend en outre l'essuyage de la surface de la feuille d'électrode après le revêtement par immersion, et dans lequel l'essuyage est effectué avec du papier sans poussière.

7. Procédé de préparation d'une feuille d'électrode comprenant un électrolyte en gel selon la revendication 5, dans lequel une température de la polymérisation in situ est de 70-75 °C, et la durée de la polymérisation in situ est de 16-32 h ;
éventuellement, le procédé comprend en outre l'essuyage d'une languette d'électrode de la feuille d'électrode après la polymérisation in situ, et dans lequel un solvant est le diméthylsulfoxyde pour essuyer la languette d'électrode de la feuille d'électrode ;
éventuellement, le séchage est un séchage sous vide, et une température du séchage est de 80-85 °C.

8. Procédé de préparation d'une feuille d'électrode comprenant un électrolyte en gel selon la revendication 5, dans lequel le procédé comprend les étapes suivantes :
(1) placement d'une feuille d'électrode verticalement dans un film laminé en aluminium contenant une solution pour la préparation d'un électrolyte en gel pendant 20-30 h, puis retrait de la feuille d'électrode, et essuyage de la surface de la feuille d'électrode avec du papier sans poussière, de manière à compléter le revêtement par immersion de la feuille d'électrode ;
(2) placement de la feuille d'électrode après le revêtement par immersion à l'étape (1) dans un film laminé en aluminium, placement de celle-ci à 70-75 °C pour une polymérisation in situ pendant 24 h, puis retrait de la feuille d'électrode et essuyage d'une languette d'électrode avec du diméthylsulfoxyde ;
(3) enveloppement de la feuille d'électrode après la polymérisation in situ à l'étape (2) avec du papier sans poussière, et placement de celle-ci dans un four pour séchage sous vide à 80-85 °C, de manière à obtenir une feuille d'électrode comprenant un électrolyte en gel.

9. Feuille d'électrode comprenant un électrolyte en gel préparé par le procédé selon la revendication 5 ;
éventuellement, l'électrolyte en gel sur la feuille d'électrode comprenant un électrolyte en gel présente une structure poreuse ;
éventuellement, l'électrolyte en gel sur la feuille d'électrode comprenant un électrolyte en gel présente une structure poreuse élastique.

10. Batterie semi-solide, dans laquelle au moins l'une d'une feuille d'électrode positive ou d'une feuille d'électrode négative de la batterie semi-solide utilise la feuille d'électrode comprenant un électrolyte en gel selon la revendication 9 ;
éventuellement, la batterie semi-solide comprend au moins l'une d'une batterie à poche, d'une batterie cylindrique et d'une batterie à boîtier carré en aluminium ;
éventuellement, la batterie semi-solide est une batterie à poche.
